# EUROPÄISCHE PATENTANMELDUNG

(11) **EP 1 168 691 A1**
(43) Veröffentlichungstag der Anmeldung: **02.01.2002**
(21) Anmeldenummer: 00125072.9
(22) Anmeldetag: 17.11.2000
(51) Int. Cl.: H04H 1/00, B60M 1/00, H04B 3/54

(54) **Verfahren zum Vorführen von Informationen in einem mittels elektrischer Energie betriebenen Fahrzeuges, wobei die Fahrleitung, die zur Übertragung elektrischer Energie an das Fahrzeug dient, zusätzlich verwendet wird für die Übertragung von Datensignalen an das Fahrzeug**

(30) Priorität: 08.06.2000 DE 10028516
(71) Anmelder: Trend Network AG, 40210 Düsseldorf (DE)
(72) Erfinder: Möller, Michael, 40625 Düsseldorf (DE); Schäffer, Christian, 86343 Königsbrunn (DE)
(74) Vertreter: Rox, Thomas Dr.

(57) **Zusammenfassung**

Die Erfindung betrifft ein Verfahren zum Vorführen von Informationen in einem mittels einer Stromzuführung betriebenen Fahrzeug, bei dem Stamminformationen auf einem Computer gespeichert werden, die danach auf mindestens einer im Fahrzeug angeordneten Vorführvorrichtung vorgeführt werden, bei dem Zusatzinformationen auf den Computer übertragen werden, bei dem die Zusatzinformationen vom Computer ausgewertet werden und bei dem in Abhängigkeit von den Zusatzinformationen die auf der mindestens einen Vorführvorrichtung vorgeführten Informationen verändert werden, bei dem das technische Problem, daß Verfahren zum Vorführen von Informationen in einem bewegten Fahrzeug dahingehend zu verbessern, daß die Zusatzinformationen mit hoher Datenrate auf das Fahrzeug übertragen werden, dadurch gelöst ist, die Zusatzinformationen über die Stromzuführung des Fahrzeuges als Datensignale auf den Computer übertragen werden, wobei die Datensignale auf die an der Stromzuführung anliegenden Spannung aufmoduliert werden.

## Beschreibung

Die Erfindung betrifft ein Verfahren zum Vorführen von Informationen, in einem mittels einer Stromzuführung betriebenen Fahrzeug, bei dem Stamminformationen auf einem Computer gespeichert werden, die danach auf mindestens einer im Fahrzeug angeordneten Vorführvorrichtung vorgeführt werden, bei dem Zusatzinformationen auf den Computer übertragen werden, bei dem die Zusatzinformationen vom Computer ausgewertet werden und bei dem in Abhängigkeit von den Zusatzinformationen die auf der mindestens einen Vorführvorrichtung vorgeführten Informationen verändert werden,

Ein derartiges Verfahren wird bisher insbesondere in überregionalen Zügen eingesetzt, wobei die Vorführvorrichtungen als Computerbildschirme ausgebildet sind, auf denen die Stamminformationen einem Benutzer dargestellt werden. Die Stamminformationen werden an vorgegebenen Standorten wie bspw. in einem Betriebshof auf den Computer übertragen und bleiben bis zu einem nächsten Aufenthalt an einem derartigen Standort unverändert, da während der Fahrt zwischen zwei Betriebshöfen kein weiterer Datenaustausch stattfindet. Daher können mit den aus dem Stand der Technik bekannten Verfahren lediglich Informationen mit einer Aktualität vorgeführt werden, die an den Zeitpunkt der Übertragung der Stamminformationen geknüpft ist.

Weiterhin ist ein Verfahren bekannt, bei dem in Haltestellen von Bussen und U-Bahnen Informationen auf Bildschirmen oder Leinwänden vorgeführt werden. Dieses Verfahren nutzt bestehende Telefonverbindungen für die Übertragung der Daten aus, wodurch ein Vorführen auch aktueller Informationen möglich ist. Jedoch benötigt dieses Verfahren in jedem Fall eine direkte Datenverbindung, so daß es insbesondere bei bewegten Fahrzeugen nur über mobile Telefonverbindungen anwendbar ist. Die Kosten des Verfahrens sind daher erheblich.

Aus der DE 196 39 546 A1 ist ein Verfahren zur fahrzeuggebundenen Informationsübermittlung bekannt, das dazu ausgelegt ist, auf der Fahrtstrecke eines Fahrzeuges, wie bspw. eines öffentlichen Verkehrsmittels, ortsspezifische visuelle und/oder akustische Informationen bereit zu stellen, die am aktuellen Standort des Fahrzeugs stattfinden bzw. angeboten werden. Erreicht wird dies durch eine Verknüpfung abgespeicherter Werbeinformationen, die geographischen Daten zugeordnet sind, mit aktuellen Fahrzeug-Standortdaten, die bspw. über das GPS-System gewonnen werden. Zugunsten einer Aktualisierung der abgespeicherten Daten kann eine Daten-Funkfernübertragung vorgesehen sein, wobei fahrzeugseitig eine entsprechende Empfangsanlage vorhanden sein muß.

Aus der DE 296 15 782 U1 ist weiterhin ein Fahrgastinformationssystem für Schienenfahrzeuge bekannt, das eine Empfangseinrichtung zum Empfangen von unterschiedlichen Informationen enthaltenen Funksignalen und eine Informationsverarbeitungs- und Speichereinrichtung zum Auswerten der in den Funksignalen enthaltenen Informationen sowie zum Abspeichern dieser Informationen oder zum Erneuern entsprechender bereits abgespeicherter zugehöriger Informationen aufweist. Die Fahrgäste können selektiv die Informationsarten bestimmen, die in der Informationsverarbeitungs- und Speichereinrichtung gespeichert sind und selektiv dem Fahrgast angezeigt werden. Zur Datenübertragung wird eine telefonische Verbindung hergestellt, die insbesondere als Mobil-Telefonverbindung ausgebildet ist.

Die DE 43 10 216 A1 offenbart ein Verfahren zur Eingabe von Informationen in ein digitales Fahrgastinformationssystem, bei dem ein Datenaustausch mittels eines Schreib/Lesespeichers durchgeführt wird, der in einer Bearbeitungsstation eingebracht und dort mit gewünschten Informationen beschrieben wird und der anschließend in das digitale Fahrgastinformationssystem eingebracht und ausgelesen wird. Eine Übertragung der Daten findet somit über Datenspeichermedien statt.

Aus der DE 197 08 764 A1 ist weiterhin ein interaktives digitales Informations- und Unterhaltungssystem für Fahrzeuge bekannt, bei dem jeweils ein Fahrsitz ein Terminal des Informationssystems aufweist, wobei mindestens ein Bildschirm eines Terminals in die Rückenlehne des Fahrsitzes integriert ist, der sich in Sitzrichtung vor dem Fahrsitz, dem dieses Terminal zugeordnet ist. Ein Zentralrechner ist vorgesehen, der zum Datenaustausch mit einem externen stationären Rechner an einem Funkmodem angeschlossen ist. Mit Hilfe des Funkmodems können dem Zentralrechner nicht nur aktuelle Daten übermittelt werden, sondern es besteht darüber hinaus auch die Möglichkeit, daß ein Fahrgast über sein Terminal mit der Außenwelt kommuniziert und bspw. über das Internet elektronische Post erledigen kann. Daher sind die Funkmodems für den Aufbau einer Telefonverbindung ausgebildet. Darüber hinaus ist eine Funkempfangseinrichtung zum Empfang von Radio- und Fernsehprogrammen vorgesehen, so daß auf dem Terminal des Informationssystems auch Radio- und Fernsehprogrammen dargestellt werden können.

Schließlich offenbart die DE 44 14 626 A1 ein Verkehrsinformationssystem mit mindestens einer zentralen elektronischen Recheneinheit. Diese ist elektrisch oder funktechnisch zur Datenübertragung mit Soll- und Istwertquellen gekoppelt, wobei mit Hilfe von Abfrageeinheiten, die sich am Aufenthalts-/Tätigkeitsort des Benutzers des Verkehrsmittels befinden, abgefragt werden können. Die Abfrageeinheiten sind über Fernsprechapparate, die über das Telefonnetz oder ein Mobilfunknetz mit der zentralen elektronischen Recheneinheit gekoppelt sind, verbunden.

Weiterhin ist aus der DE 198 23 234 A eine Vorrichtung und ein Verfahren zur Datenübertragung bzw. Signalauskopplung bei Stromleitern bekannt. Dazu werden zwei unterschiedliche Auskoppler eingesetzt, um aus der stromführenden Leitung die aufmodulierten Datensignale auszukoppeln. Die dabei beschriebene Technik ist im wesentlichen auf einen Spannungsbereich bezogen, der in Haushalten zur Anwendung kommt.

Ausgehend von diesem Stand der Technik liegt der vorliegenden Erfindung das technische Problem zugrunde, das Verfahren zum Vorführen von Informationen in einem bewegten Fahrzeug dahingehend zu verbessern, daß die Zusatzinformationen mit hoher Datenrate auf das Fahrzeug übertragen werden.

Das zuvor aufgezeigte technische Problem ist erfindungsgemäß dadurch gelöst, daß die Zusatzinformationen über die Stromzuführung des Fahrzeuges als Datensignale auf den Computer übertragen werden, wobei die Datensignale auf die an der Stromzuführung anliegenden Spannung aufmoduliert werden.

Das zuvor beschriebene Verfahren ist in bevorzugter Weise bei bewegten Fahrzeugen mit Stromzuführung anwendbar, wobei insbesondere Schienenfahrzeuge und Oberleitungsbusse des öffentlichen Personenverkehrs für eine Anwendung des Verfahrens geeignet sind.

Dem erfindungsgemäßen Verfahren liegt die Erkenntnis zugrunde, daß lediglich ein Teil der vorgeführten Informationen regelmäßig aktualisiert werden muß, während der weitaus größte Teil der Informationen eine ausreichende Aktualität besitzt, um als Stamminformationen auf dem Computer gespeichert zu sein. Daher können die Stamminformationen in größeren Datenmengen gespeichert sein, so daß zumindest der weitaus größte Teil der vorgeführten Informationen eine hohe Vorführqualität besitzt. Lediglich die zu aktualisierenden Informationen müssen als Zusatzinformationen mit Hilfe der Sendevorrichtung und der Empfangsvorrichtung auf den Computer übertragen werden. Diese Zusatzinformationen werden dann dazu verwendet, die vorgeführten Informationen zu verändern, insbesondere zu aktualisieren. Aber auch die Zusatzinformationen sind teilweise umfangreich, so daß eine schnelle Datenübertragung vorteilhaft ist.

Erfindungsgemäß werden die Zusatzinformationen als Datensignale über die Stromführung des Fahrzeuges auf den Computer übertragen. Dazu befindet sich im Fahrzeug am Ausgang des Stromabnehmers ein Wandler, der aus dem Wechselspannungssignal einer vorgegebenen niedrigen Frequenz das aufmodulierte hochfrequente Signal extrahiert und zu einer digitalen Spannungsfolge umwandelt. Diese wird vom Computer aufgenommen, so daß die in den Datensignalen enthaltenen Zusatzinformationen ausgewertet und weiter verarbeitet werden können. Es ist demnach erkannt worden, daß die Übermittlung von Daten über Stromleitungen nicht nur bei Spannungen durchgeführt werden kann, die im Bereich der in Haushalten angewendeten Spannungsbereichen liegt, sondern daß die Datenübertragung auch bei einer Hochspannungsversorgung von Fahrzeugen angewendet werden kann. Da die Übertragungsraten dabei erheblich größer als beispielsweise bei einer Funkübertragung gewählt werden können, ist eine schnelle Signalübertragung der Zusatzinformationen auf ein sich bewegendes Fahrzeug möglich. Da zudem auch in den Bereichen, in denen die Funksignale nur abgeschwächt oder gar nicht vom Fahrzeug empfangen werden können, die Stromzuführung vorhanden ist, ist ein nahezu unterbrechungsfreies Übertragen der Zusatzinformationen auf das Fahrzeug möglich.

Handelt es sich bei den Fahrzeugen um Züge oder Straßenbahnen, so wird mit Hilfe von Oberleitungen die Zusatzinformationen auf das Fahrzeug übertragen. Handelt es sich dagegen beispielsweise um U-Bahnen so werden die Zusatzinformationen mit Hilfe von im Fahrweg integrierten Leitungen auf das Fahrzeug übertragen.

Je nach Größe des Streckennetzes, auf dem sich die Fahrzeuge bewegen, ist dieses in einen oder mehrere Abschnitte aufgeteilt, die jeweils separat mit der Betriebsspannung versorgt werden. Dabei ist für jeden Streckenabschnitt mindestens ein Umspannwerk vorgesehen. Weiterhin sind die Umspannwerke zumindest gruppenweise mit einer gemeinsamen Spannungsversorgung, beispielsweise einem Kraftwerk, verbunden und werden darüber mit Strom versorgt.

Für das Aufmodulieren der Datensignale auf die Stromzuführung gibt es zwei Möglichkeiten. Zum einen kann in jedem Umspannwerk das Aufmodulieren der Datensignale separat durchgeführt werden, wogegen bei einer anderen Lösung das Aufmodulieren der Datensignale in der gemeinsamen Spannungsversorgung durchgeführt wird, so daß beim Transformieren der Hochspannung auf die Betriebsspannung in jedem Umspannwerk auch die Modulation mit übertragen wird. In jedem Fall ist gewährleistet, daß die Stromzuführung, mit der das Fahrzeug in Verbindung steht, nicht nur die Betriebsspannung für den Antrieb und die sonstige elektrische Versorgung des Fahrzeuges, sondern auch die Übertragung der Datensignal bewerkstelligt. Dabei werden die aufzumodulierenden Daten jeweils entweder den Umspannwerken separat oder der übergeordneten Spannungsversorgung zugeleitet und verarbeitet.

Bei dem Aufmodulieren der Datensignale auf die Stromzuführung können sämtliche bekannten Modulationsformen angewendet werden. Dieses sind eine Pulscodemodulation, eine Differenzpulscodemodulation, eine Bi-L-Modulation, eine Frequenzmodulation oder Phasenmodulation. Diese verschiedenen Modulationsarten sind aus dem Stand der Technik bekannt und werden daher nicht im einzelnen erläutert. Dieses ist insofern auch nicht erforderlich, da es auf die Art der Modulation nicht ankommt, sondern darauf, in welcher Weise die Datensignale auf das sich bewegende Fahrzeug übertragen werden.

In besonders bevorzugter Weise werden die Datensignale in mindestens zwei verschiedenen Bandbreiten aufmoduliert. Diesem Merkmal liegt die Erkenntnis zugrunde, daß aufgrund des Fahrbetriebes in erheblichem Umfang Störsignale als Rauschen erzeugt werden. Die Störsignale werden beispielsweise durch während der Fahrt auftretende kurzzeitige Unterbrechungen der Stromzufuhr durch ein Loslösen des Stromabnehmers von der Oberleitung ausgelöst, wobei dieses Rauschen mit zunehmender Fahrgeschwindigkeit zunimmt. Darüber hinaus können auch Kontaktschwierigkeiten zwischen Rädern und den Schienen, die als Massenpotential dienen, durch auf den Schienen liegenden Partikeln entstehen. So wird beispielsweise für eine bessere Bremswirkung bei feuchtem oder nassem Wetter Sand auf die Schienen gestreut, wodurch jeweils Kontaktschwierigkeiten zwischen den Rädern und den Schienen auftreten. Je nach Grad der Störungen können entweder die niedrige Bandbreite von beispielsweise 10 MBit bei hohem Rauschen oder eine Bandbreite von 100 MBit für geringere Störungen der Datensignale zur Anwendung kommen. Somit wird eine flexible Übertragungsrate realisiert und die maximale Übertragungsrate erreicht.

Als Stamminformationen dienen beispielsweise Kurzfilme, Videokunst, Computeranimation, Trickfilme sowie jegliche Form von Werbeinformationen. Als Zusatzinformationen können beispielsweise Haltestelleninformationen, Umsteigeund Anschlußinformationen, insbesondere auch für eine Vernetzung mit anderen öffentlichen oder privaten Verkehrsmitteln, Wetternachrichten, Nachrichtenschlagzeilen, Börseninformationen, Veranstaltungshinweise, Bürgerinformationen oder Touristikinformationen übertragen werden. Die Zusatzinformationen werden dann derart mit den Stamminformationen verbunden, daß in Abhängigkeit von den Zusatzinformationen die auf Vorführvorrichtungen dargestellten Informationen verändert, insbesondere aktualisiert werden.

Die Stamminformationen werden vorzugsweise mit Hilfe einer Datenleitung über Telefon, einem lokalen Netzwerk oder mittels Datenträgeraustausch auf den Computer übertragen. Das bedeutet für die Anwendung bei Fahrzeugen, daß die Stammdaten während des Aufenthaltes an vorgegebenen Standorten, wie bspw. Betriebshöfen, auf den Computer im Fahrzeug übertragen werden. Für stationäre Anwendungen werden die Stammdaten bspw. mittels einer Telefonverbindung auf dem Computer gespeichert, während die Zusatzinformationen - bspw. während der Fahrt - über die Sende- und Empfangsvorrichtungen übertragen werden.

In bevorzugter Weise werden mit Hilfe der Zusatzinformationen die Inhalte der vorgeführten Informationen verändert, so daß beispielsweise die Daten eines Wetterberichtes mit Hilfe der Zusatzinformationen aktualisiert werden, der während eines vorgegebenen Zeitablaufes der vorgeführten Informationen in regelmäßigen Abständen vorgeführt wird.

In besonders bevorzugter Weise weisen die Zusatzinformationen zumindest teilweise ausführbare Anweisungen auf, die mit Hilfe des Computers interpretiert werden können. Somit werden Steuerbefehle auf den Computer übertragen, um nicht nur den Inhalt, sondern auch die zeitliche Reihenfolge der vorgeführten Informationen zu verändern. Dadurch wird der zeitlichen Ablauf der vorgeführten Informationen, also das Programm selbst, beeinflußt, um beispielsweise eine aktuelle Nachrichtenschlagzeile einzufügen. Eine große Aktualität der vorgeführten Informationen wird somit erreicht, ohne daß die Informationen des gesamten Programmes übertragen werden müssen.

In weiter bevorzugter Weise werden die als Zusatzinformationen übertragenen ausführbaren Anweisungen dazu verwendet, um objektorientierte Informationen im Computer entsprechend der Anweisungen zusammenzuführen und für die Vorführung vorzubereiten. Beispielsweise können im Computer abgespeicherte Objekte, die als Symbole für die Darstellung eines Wetterberichtes verwendet werden, entsprechend der übertragenen Anweisungen vom Computer zusammengeführt und für eine Vorführung vorbereitet werden. Somit wird mit einem Minimum an Zusatzinformationen eine hohe Qualität der dargestellten Informationen, beispielsweise eine filmähnliche Bildersequenz eines Wetterberichtes, produziert. Dabei sind die objektorientierten Informationen vorzugsweise als Stamminformationen auf dem Computer gespeichert, jedoch können diese auch als Zusatzinformationen übertragen werden.

Die bisher angeführten Beispiele beziehen sich darauf, daß die Stamm- und Zusatzinformationen zu bildlichen Informationen verarbeitet werden. Darüber hinaus läßt sich das erfindungsgemäße Verfahren auch für akustische Informationen oder auch für eine Kombination von bildlichen und akustischen Informationen nutzen.

In einer weiteren bevorzugten Ausgestaltung der vorliegenden Erfindung ist der Computer mit einem geographischen Positionierungssystem, insbesondere einem Global Positioning System (GPS) verbunden, so daß der Computer die Zusatzinformationen in Abhängigkeit von der geographischen Position des Fahrzeuges auswertet. Beispielsweise können somit Umsteige- und Anschlußinformationen in Abhängigkeit von der nächsten Haltestelle des Fahrzeuges aus den übertragenen Zusatzinformationen herausselektiert werden. Dazu kann in weiter bevorzugter Weise auf ein bereits bestehendes Fahrgastinformationssystem zurückgegriffen werden.

Im folgenden wird die Erfindung anhand eines Ausführungsbeispieles näher erläutert, wobei auf die beigefügte Zeichnung Bezug genommen wird. In der Zeichnung zeigen:
- Fig. 1: ein Ausführungsbeispiel des erfindungsgemäßen Verfahrens in einer schematischen perspektivischen Darstellung und
- Fig. 2: ein weiteres Ausführungsbeispiel des erfindungsgemäßen Verfahrens, ebenfalls in einer schematischen perspektivischen Darstellung.

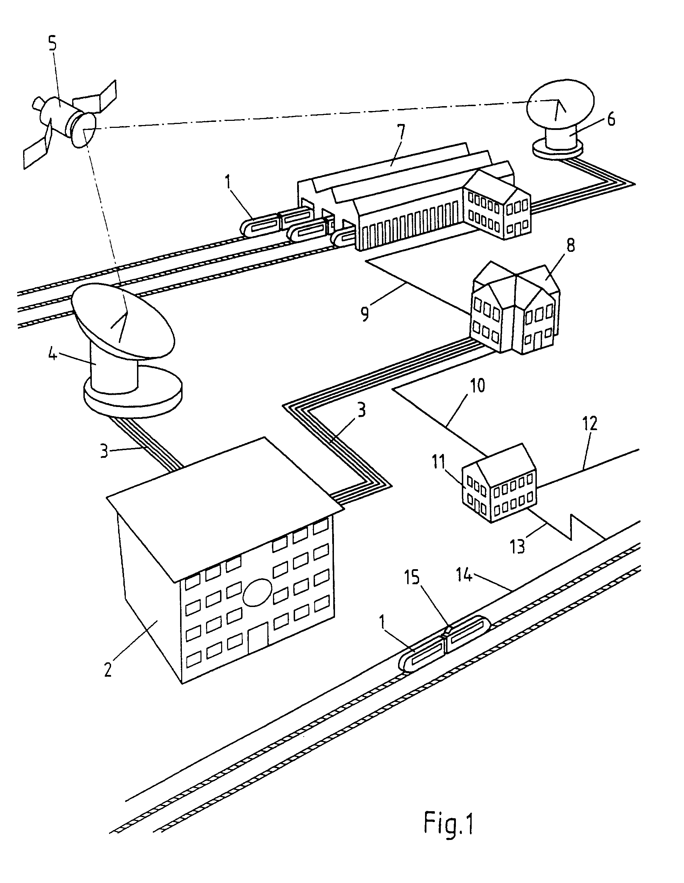

Fig. 1 zeigt ein erstes Ausführungsbeispiel des erfindungsgemäßen Verfahrens zum Vorführen von Informationen in einem mittels einer Stromführung betriebenen Fahrzeug. In einem Sendestudio 2 findet eine sogenannte Offline-Produktion statt, bei der alle Grundlagen für ein Programm einer vorgegebenen Zeiteinheit, beispielsweise ein tägliches Programm in Form von einzelnen Filmen erstellt. Vom Sendestudio 2 werden die vorgeplanten Informationen, beispielsweise Filmbeiträge, die Informationen aus Wirtschaft und Handel oder Werbeinformationen enthalten, über ein Intranet 3 an einen Sender 4 weitergegeben. Der Sender 4 überträgt die Informationen über einen Satelliten 5 und einen Empfänger 6 auf mindestens einen Betriebshof 7 des Betreibers der Schienenfahrzeuge 1. Im Betriebshof 7 werden die vom Sendestudio 2 empfangenen Informationen als Stamminformationen auf den im Schienenfahrzeug 1 angeordneten Computer (nicht dargestellt) übertragen. Somit findet eine Aktualisierung der Stamminformationen auf dem Computer während des Aufenthaltes des Schienenfahrzeuges 1 im Betriebshof 7 statt. Die Datenübertragung kann dabei mit Hilfe einer Datenleitung, einem lokalen Netzwerk oder mittels Datenträgeraustausch auf den Computer erfolgen.

Nachdem das Schienenfahrzeug 1 den Betriebshof 7 verlassen hat, werden die Stamminformationen auf Bildschirmgeräten (nicht dargestellt), die als Vorführvorrichtungen dienen, in einer vorprogrammierten Reihenfolge vorgeführt.

In einem zweiten Sendestudio 8, das im Ausführungsbeispiel getrennt vom ersten Sendestudio 2 ist und über das Intranet ebenfalls die Stamminformationen vom ersten Sendestudio 2 erhält, werden aktuelle Informationen gesammelt und in Form von Graphikobjekten, Texten und Skripten zusammengestellt. Dazu werden zum einen allgemeine Informationen in Form von Nachrichten aus Politik und Handel sowie Wetterprognosen gesammelt. Zum anderen werden aktuelle Meldungen von dem Betriebshof 7 bzw. von allen Betriebshöfen 7 des Betreibers über ein Intranet 9 übertragen. Diese Meldungen beziehen sich bspw. auf Fahrplaninformationen, die insbesondere Verspätungsmeldungen von Schienenfahrzeugen 1 des Betreibers beinhalten können.

Die zusammengefaßten aktuellen Informationen werden vom Sendestudio 8 über ein Intranet 10 auf ein Umspannwerk 11 übertragen. Von diesem werden die aktuellen Informationen als Zusatzinformationen auf die Schienenfahrzeuge 1 insbesondere dann übertragen, wenn sie unterwegs sind, also sich außerhalb der Betriebshöfe 7 befinden. Die Zusatzinformationen werden dazu zunächst auf einem Produktionsrechner im Betriebshof 7 der Online-Produktion als Graphiken, Bilder, Texte und/oder Skripte erzeugt. Diese werden in eine für das Aufmodulieren geeignete Form konvertiert und gegebenenfalls kodiert und über das Umspannwerk auf die Stromzuführung übertragen.

Das Umspannwerk 11 transformiert die über eine Leitung 12 von einem Hochspannungs-Versorungsnetz zugeleitete Hochspannung herunter auf die über eine Leitung 13 auf eine Oberleitung 14 übertragene Betriebsspannung für das Schienenfahrzeug 1. Nach der Transformation der Hochspannung auf die Betriebsspannung werden die über die Leitung 10 zugeführten Zusatzinformationen nach einem vorgegebenen Modulationsverfahren aufmoduliert. Das modulierte Datensignal ist dann dem über die Leitung 13 abgeführten Wechselspannung überlagert, wobei die Amplitude des aufmodulierten Datensignals genügend groß im Verhältnis zur Amplitude der Betriebswechselspannung ist, um mit ausreichender Fehlergenauigkeit im Fahrzeug 1 erfaßt werden zu können.

Das Schienenfahrzeug 1 weist mindestens einen Stromabnehmer 15 auf, der während der Fahrt mit der Oberleitung 14 in Kontakt steht. Der über den Stromabnehmer 15 dem Schienenfahrzeug 1 zugeleitete Betriebsstrom weist dann die aufmodulierten Datensignale auf, die vor einem Gleichrichten der Betriebswechselspannung zum Antrieb der Elektromotoren mittels eines Wandlers abgegriffen werden. Der Wandler führt eine Demodulation durch und erzeugt einen Datenbitstrom, der dem im Fahrzeug angeordneten Computer zugeleitet wird.

Der Computer, der mit dem Wandler verbunden ist, speichert die Datensignale zwischen, die anschließend in die ursprünglichen Graphiken, Bilder, Texte und Skripte als Zusatzinformationen dekodiert werden.

Sofern es sich bei den Zusatzinformationen um Graphiken, Bilder oder Texte handelt, werden diese vom Computer an gegebenenfalls vorgegebenen Positionen in das laufende Programm eingefügt. Dabei kann es sich beispielsweise um aktuelle Nachrichten oder um Fahrgastinformationen handeln.

Die Zusatzinformationen können auch Skripte in einer vorgegebenen Skriptsprache enthalten, die vom Computer interpretiert, insbesondere auch laufzeitinterpretiert werden können. Somit erhält der Computer über die Stromzuführung Steuerbefehle, um aktiv den Ablauf des Programmes der vorgeführten Informationen zu beeinflussen.

Zum einen kann eine derartige Beeinflussung beispielsweise darin bestehen, ein Graphik-, Film- oder Textobjekt aus dem Programm herauszunehmen oder in dieses einzufügen, so daß die zeitliche Reihenfolge der vorgeführten Informationen verändert wird. Zum anderen können die ausführbaren Anweisungen vom Computer derart interpretiert werden, daß als Stamminformationen gespeicherte Graphik-, Film- und/oder Textobjekte miteinander kombiniert werden, wie im folgenden anhand des Beispieles eines aktualisierten Wetterberichtes beschrieben wird.

Für die bildliche Darstellung eines Wetterberichtes ist eine begrenzte Anzahl von Symbolen wie beispielsweise eine Sonne, Wolken oder Temperaturangaben sowie Landkarten zur geographischen Anordnung der Symbole erforderlich. Sind diese verschiedenen Symbole als Objekte in den Stamminformationen im Computer abgespeichert, so können mit den ausführbaren Anweisungen, die als Zusatzinformationen übertragen worden sind, die verschiedenen Objekte so zusammengestellt werden, das filmähnlicher aktualisierter Wetterbericht mit festen und/oder sich bewegenden Symbolen für eine bestimmte Region auf den Bildschirmen im Schienenfahrzeug 1 dargestellt wird. Der zuletzt beschriebene Vorgang kann auch als objektorientierte Steuerung des Vorführens von Informationen in einem bewegten Fahrzeug bezeichnet werden.

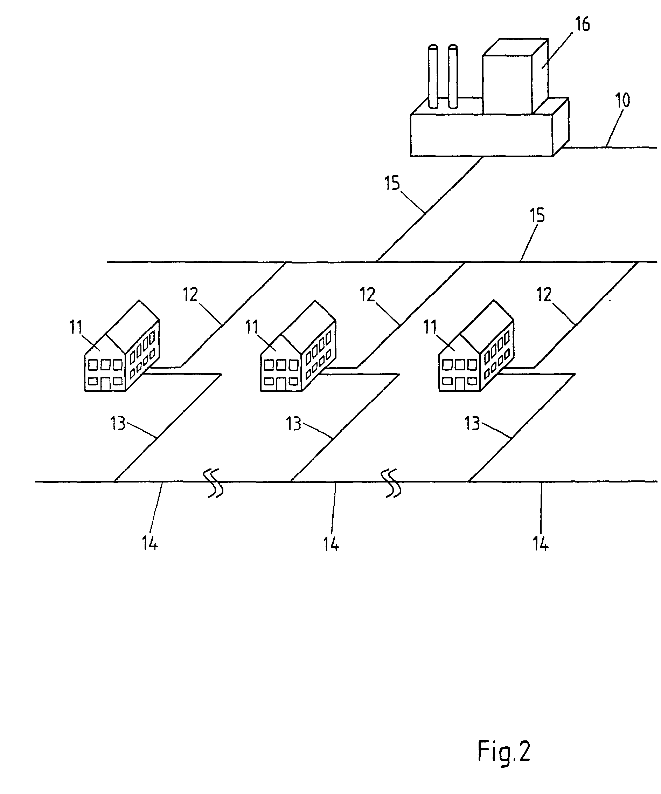

In der Fig. 2 ist ein zweites Ausführungsbeispiel des vorliegenden erfindungsgemäßen Verfahrens dargestellt. Fig. 2 zeigt eine Mehrzahl von Umspannwerken 11, die jeweils einen durch die Oberleitung 14 dargestellten Strekkenabschnitt über die Leitungen 13 mit Betriebsspannung versorgen. Die Umspannwerke 11 sind über die Leitungen 12 mit einem gemeinsamen Versorgungsnetz 15 verbunden, das vom einem Kraftwerk 16 mit Versorungsspannung versorgt wird. Im in Fig. 2 dargestellten Ausführungsbeispiel ist nun das Kraftwerk mit der Datenleitung 10 verbunden, so daß die über das gemeinsame Versorungsnetz 15 übertragene Versorungsspannung mittels geeigneter Wandlereinrichtungen mit den Datensignalen moduliert werden kann. Die derart modulierte Versorgungsspannung wird dann in den Umspannwerken 11 auf die Betriebsspannung herunter transformiert, wobei das auf der Versorgungsspannung aufmodulierte Datensignal auf die Betriebsspannung übertragen wird. Dieses geschieht entweder direkt beim Transformieren oder dadurch, daß vor dem Transformieren die Datensignale abgegriffen und auf das herunter transformierte Betriebsspannungsignal erneut aufmoduliert wird.

## Patentansprüche

1. Verfahren zum Vorführen von Informationen in einem mittels einer Stromzuführung betriebenen Fahrzeug,
- bei dem Stamminformationen auf einem Computer gespeichert werden, die danach auf mindestens einer im Fahrzeug angeordneten Vorführvorrichtung vorgeführt werden,
- bei dem Zusatzinformationen auf den Computer übertragen werden,
- bei dem die Zusatzinformationen vom Computer ausgewertet werden und
- bei dem in Abhängigkeit von den Zusatzinformationen die auf der mindestens einen Vorführvorrichtung vorgeführten Informationen verändert werden,
**dadurch gekennzeichnet,**
- **daß** die Zusatzinformationen über die Stromzuführung des Fahrzeuges als Datensignale auf den Computer übertragen werden, wobei die Datensignale auf die an der Stromzuführung anliegenden Spannung aufmoduliert werden.

2. Verfahren nach Anspruch 1, bei dem mit Hilfe von Oberleitungen die Zusatzinformationen auf das Fahrzeug übertragen werden.

3. Verfahren nach Anspruch 1, bei dem mit Hilfe von im Fahrweg integrierten Leitungen die Zusatzinformationen auf das Fahrzeug übertragen werden.

4. Verfahren nach einem der Ansprüche 1 bis 3, bei dem das Aufmodulieren der Datensignale im Stromzuführungsnetz mindestens abschnittsweise phasengleich durchgeführt wird.

5. Verfahren nach Anspruch 4, bei dem für jeden Strekkenabschnitt des Stromzuführungsnetzes mindestens ein Umspannwerk eingesetzt wird und bei dem die Umspannwerke zumindest gruppenweise von einer gemeinsamen Spannungsversorgung versorgt werden.

6. Verfahren nach Anspruch 5, bei dem in jedem Umspannwerk das Aufmodulieren der Datensignale durchgeführt wird.

7. Verfahren nach Anspruch 5, bei dem das Aufmodulieren der Datensignale in der gemeinsamen Spannungsversorgung durchgeführt wird.

8. Verfahren nach einem der Ansprüche 1 bis 7, bei dem zum Aufmodulieren der Datensignale eine Pulscodemodulation, eine Differenzpulscodemodulation, eine Bi-L-Modulation, eine Frequenzmodulation oder Phasenmodulation angewendet wird.

9. Verfahren nach Anspruch 8, bei dem die Datensignale in mindestens zwei verschiedenen Bandbreiten aufmoduliert werden.

10. Verfahren nach Anspruch 9, bei dem als zwei Bandbreiten 10 MBit und 100 MBit gewählt werden.

11. Verfahren nach einem der Ansprüche 1 bis 10, bei dem die Stamminformationen bei ruhendem Fahrzeug mit Hilfe einer Datenleitung, einem lokalen Netzwerk oder mittels Datenträgeraustausch auf den Computer übertragen werden.

12. Verfahren nach einem der Ansprüche 1 bis 11, bei dem mit Hilfe der Zusatzinformationen die Inhalte der vorgeführten Informationen verändert werden.

13. Verfahren nach einem der Ansprüche 1 bis 12, bei dem die Zusatzinformationen zumindest teilweise ausführbare Anweisungen aufweisen, die mit Hilfe des Computers interpretiert werden.

14. Verfahren nach Anspruch 13, bei dem mit Hilfe der Zusatzinformationen die zeitliche Reihenfolge der vorgeführten Informationen verändert wird.

15. Verfahren nach Anspruch 13 oder 14, bei dem mit Hilfe der Zusatzinformationen objektorientierte Informationen zusammengefügt werden.

16. Verfahren nach Anspruch 15, bei dem die objektorientierten Informationen als Stamminformationen und/oder als Zusatzinformationen auf den Computer übertragen werden.

17. Verfahren nach einem der Ansprüche 1 bis 16, bei dem die Stamminformationen und Zusatzinformationen bildliche und/oder akustische Informationen sind.

18. Verfahren nach einem der Ansprüche 1 bis 17, bei dem der Computer mit einem geographischen Positionierungssystem verbunden ist und bei dem die Zusatzinformationen in Abhängigkeit von der geographischen Position des Fahrzeuges vom Computer ausgewertet werden.
